# EUROPÄISCHE PATENTSCHRIFT

(11) **EP 0 552 680 B1**
(45) Veröffentlichungstag und Bekanntmachung des Hinweises auf die Patenterteilung: **29.07.1998**
(21) Anmeldenummer: 93100565.6
(22) Anmeldetag: 15.01.1993
(51) Int. Cl.: C08K 5/10

(54) **Thermoplastische Kunststoff-Formmasse**
Thermoplastic resin moulding matter
Matière à mouler thermoplastique de résine

(30) Priorität: 18.01.1992 DE 4201190
(43) Veröffentlichungstag der Anmeldung: 28.07.1993
(73) Patentinhaber: Clariant GmbH, 65929 Frankfurt am Main (DE)
(72) Erfinder: Heinrichs, Franz-Leo, Dr., W-8901 Gablingen (DE); Hohner, Gerd, Dr., W-8906 Gersthofen (DE); Kiesel, Harald, W-8906 Gersthofen (DE); Lukasch, Anton, W-8901 Meitingen (DE); Piesold, Jan-Peter, Dr., W-8900 Augsburg (DE)

(56) Entgegenhaltungen:
- EP-A- 0 226 974
- EP-A- 0 450 695
- GB-A- 2 033 403
- US-A- 4 097 435
- DATABASE WPIL Week 9024, Derwent Publications Ltd., London, GB; AN 90-181497
- Taschenbuch der Kunststoff-Additive, R. Gächter und H. Müller,Carl Hanser Verlag, München, 1983, Seite 334.

## Beschreibung

Thermoplastische Kunststoffe werden in der Regel oberhalb ihres Schmelzpunktes oder - bei amorphen Typen - oberhalb ihrer Glasübergangstemperatur verarbeitet. Für die formgebende Verarbeitung der Kunststoffe gibt es eine Vielzahl von Verfahren, wobei sich die Auswahl letztlich nach der Gestalt des gewünschten Endartikels richtet. Folien werden beispielsweise durch Extrusion oder Kalandrieren, Hohlkörper durch Spritzguß oder Blasextrusion hergestellt. Aus wirtschaftlichen Gründen ist man an einem hohen Materialdurchsatz der Verarbeitungsmaschinen interessiert. Die Erhöhung der Verarbeitungsgeschwindigkeit stößt jedoch dort an Grenzen, wo die Materialeigenschaften der Kunststoffe die Einhaltung bestimmter Bedingungen erfordern. Viele Kunststoffschmelzen zeigen beispielsweise eine starke Neigung zum Kleben an den metallischen Teilen der Verarbeitungsmaschinen, was beispielsweise beim Blasformen oder Spritzgießen die Entnahme der Fertigprodukte erschwert. Die Klebeneigung der Fertigprodukte macht insbesondere relativ lange Kühlzeiten erforderlich, damit die Teile eine ausreichende mechanische Stabilität zur Entformung ohne Beschädigung erhalten. Um die Verarbeitungsgeschwindigkeit beispielsweise durch eine Verkürzung der Kühlzeiten zu erhöhen und damit eine Entnahme der Teile bei höheren Temperaturen zu ermöglichen, ist es also erstrebenswert, die Klebeneigung der Kunststoffschmelzen an den Verarbeitungsmaschinen zu vermindern. Dies geschieht ganz überwiegend durch den Zusatz von Gleit- und Trennmitteln.

Für die Verwendung als Gleit- und Trennmittel in Kunststoffen ist eine Vielzahl von Substanzen gebräuchlich. Hierzu gehören Fettalkohole, Fettsäuren und ihre Derivate (Salze, Ester und Amide), Montansäuren und ihre Derivate, Polyethylenwachse, oxidierte Polyethylenwachse und Paraffine.

Welches der verfügbaren Gleitmittel in einem bestimmten Kunststoff angewendet wird, richtet sich letztlich nach den Eigenschaften des Kunststoffs, der Verarbeitungsart und den Verarbeitungsbedingungen sowie den Anforderungen, die an das Endprodukt gestellt werden. Voraussetzung für die Trennwirkung eines Gleitmittels in einem bestimmten Kunststoff ist, daß zwischen beiden eine gewisse Unverträglichkeit besteht, da bei guter Mischbarkeit oder gar Löslichkeit des Gleitmittels in der Kunststoffschmelze keine Anreicherung an der Grenzfläche zwischen der Polymerschmelze und der Wandung der Verarbeitungsmaschine erfolgen kann. So werden als trennwirksame Additive in unpolaren Polyolefinschmelzen polare Verbindungen, wie beispielsweise Fettsäureester oder - amide, eingesetzt, während in polaren Kunststoffen unpolare Gleitmittel, wie beispielsweise Paraffine oder Polyethylenwachse, trennwirksam sind.

Ein besonderes Problem ergibt sich in der Anwendung von trennwirksamen Gleitmitteln in hochtransparenten Kunststoffen, wie beispielsweise Polyestern oder Polymethylmethacrylaten. In diesen Kunststoffen wirken die zum Erzielen der Trennwirkung notwendigerweise nur begrenzt verträglichen Gleitmittel häufig stark trübend, was das Aussehen der Endprodukte beeinträchtigt. Besonders kritisch ist der Einsatz von Gleit- und Trennmitteln in amorphen Polyestern. Der meist verwendete Typ unter diesen Polyestern ist das aus Terephthalsäure und Ethylenglykol erhältliche Polyethylenterephthalat, welches in seiner amorphen Form beispielsweise zur Herstellung von hochtransparenten Flaschen dient. Zugesetzte Gleit- und Trennmittel können hierbei, anders als in Polycarbonat und Polymethylmethacrylat, nicht nur aufgrund ihrer Unverträglichkeit und der dadurch erfolgenden Bildung einer separaten Gleitmittelphase trübend wirken, sondern gut verträgliche Gleitmittel können zudem aufgrund ihrer Weichmacherwirkung die Beweglichkeit der Polymerketten erhöhen und dadurch die Kristallisationsgeschwindigkeit erhöhen. Aus diesem Grund werden Gleitmittel in linearen Polyestern, insbesondere in Polyethylenterephthalat, häufig zur Erhöhung des Kristallisationsgrades eingesetzt.

Bekannt ist die Verwendung von Fettsäureestern von Polyethylenglykolen als Gleitmittel für Polyester (vgl. US 4 795 771, US 4 731 404).

Bekannt ist auch die synergistische Wirkung von Nukleierungsmitteln und Fettsäureestern wie z.B. Pentaerythrittetrastearat und Methylstearat auf die Oberflächengüte und Entformbarkeit spritzgegossener Artikel aus verstärktem Polyethylenterephthalat (vgl. US 3 516 957).

Weiterhin ist die Verwendung von Partialestern aus Monocarbonsäuren mit mehr als 8 C-Atomen und aliphatischen Polyolen mit mindestens 4 Hydroxylgruppen (beispielsweise Pentaerythrittetrastearat) in biaxial orientierten Polyesterfolien zur Verbesserung der Oberflächenschlüpfrigkeit bekannt (vgl. US 4 421 887).

Schließlich ist die Verwendung von Estern aus langkettigen Carbonsäuren, bevorzugt mit einer Kettenlänge von 20 bis 32 C-Atomen, mit linearen oder verzweigten Mono- oder Dialkoholen in Kombination mit feinen Füllstoffen zur Verbesserung der Oberflächengüte von biaxial orientierten Polyesterfolien bekannt (vgl. US 4 590 119).
Beispiele für geeignete Ester sind z.B. Ethylenglykolmontanat, Ethylmontanat, Cetylmontanat und Stearylbehenat. Da es sich um einen Synergismus zwischen dem Füllstoff und dem Ester handelt, sind für den Eintritt der Wirkung beide Komponenten nötig, während die ausschließliche Verwendung einer Komponente wirkungslos ist.

Es wurde nun gefunden, daß Ester aus langkettigen aliphatischen Monocarbonsäuren mit kurzkettigen aliphatischen Monoalkoholen die Entformbarkeit von Polyethylenterephthalat verbessern, ohne trübend oder nennenswert kristallisationsbeschleunigend zu wirken.

Die vorliegende Erfindung betrifft somit eine thermoplastische Kunststoff-Formmasse, bestehend aus 95 bis 99,99 Gew.-%, bezogen auf die Formmasse, **Polyester** und 0,01 bis 5,0 Gew.-%, bezogen auf die Formmasse, eines Gleitmittels in Form eines Esters **der technischen Montansäure** mit einem aliphatischen einwertigen Alkohol mit 1 bis 5 C-Atomen, **sowie gegebenenfalls weitere Additive**. Geeignete Polyester sind Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Poly-[2,2-bis-(4-hydroxyphenyl )-propan]-terephthalat, Polyhydroxybenzoate, sowie Block-polyether-ester, die sich von Polyethern mit Hydroxylendgruppen ableiten.

Besonders gut geeignet ist Polyethylenterephthalat. Die Polyester können auch als Gemische eingesetzt werden.

Das erfindungsgemäß zu verwendende Gleitmittel ist ein Ester der technischen Montansäure mit einem aliphatischen einwertigen Alkohol mit 1 bis 5 C-Atomen, vorzugsweise 1 bis 3 C-Atomen, insbesondere 1 C-Atom. Beispiele für die Alkoholkomponente sind Methanol, Ethanol, n-Propanol, i-Propanol, Butanole, Amylalkohole, besonders bevorzugt Methanol. Die technische Montansäure, die durch oxidative Bleichung von Rohmontanwachs gewonnen werden kann, ist ein Gemisch von C₂₄- bis C₃₄ Carbonsäuren mit Schwerpunkt C₂₈ bis C₃₂ und enthält etwa 15 Gew.-% Dicarbonsäuren. Die erfindungsgemäß zu verwendenden Ester werden auf bekannte Weise durch Veresterung der Carbonsäuren in Gegenwart eines Veresterungskatalysators, wie beispielsweise Schwefelsäure, gewonnen.

Das Gleitmittel wird nach allgemein üblichen Methoden in die Polymeren eingearbeitet. Die Einarbeitung kann beispielsweise durch Einmischen der Verbindungen und gegebenenfalls weiterer Additive in die Schmelze vor der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die den Polymeren zuzusetzende Menge liegt bei 0,01 bis 5,0, vorzugsweise 0,1 bis 1,0 Gew.-%, bezogen auf das auszurüstende Material.

Neben dem Gleitmittel kann die Kunststoff-Formmasse die üblichen Zusatzstoffe wie beispielsweise Antioxidantien, Verarbeitungsstabilisatoren, Lichtschutzmittel, Antistatika, Verarbeitungshilfsmittel, Schlagzähigkeitsmodifikatoren,die in einer Menge von 0,01 bis 10, vorzugsweise 0,01 bis 5 Gew.%, bezogen auf das Gesamtgewicht der Formmasse, zugesetzt werden, und 1 bis 60, vorzugsweise 5 bis 40 Gew.%, bezogen auf die gesamte Formmasse, Füllstoffe, Verstärkungsmittel, Flammschutzmittel, Weichmacher, Treibmittel, Pigmente, Färbemittel oder Farbstoffe enthalten.

Die erfindungsgemäße Kunststoff-Formmasse zeichnet sich durch gutes Fließen und gute Entformbarkeit aus. Sie wird deshalb insbesondere für die Herstellung glasklarer Hohlkörper verwendet.

Die nachfolgenden Beispiele sollen die Erfindung erläutern:

Als Polymer wurde ein lineares Polyethylenterephthalat mit einer Viskositätszahl (Intrinsicviskosität) von 0,81 ± 0,2 (gemessen in Dichloressigsäure) eingesetzt. Als Versuchsprodukte kamen folgende Gleitmittel zum Einsatz:

| | |
|---|---|
| Beispiel 1 | Methylester der Montansäuren¹ |
| | (Säurezahl 6 mg KOH/g, Tropfpunkt 75°C) |
| Beispiel 2 | n-Butylester der Montansäuren |
| | (Säurezahl ca. 5 mg KOH/g, Tropfpunkt 76°C) |
| Vergleichsbeispiel A | Octylester der Montansäuren |
| | (Säurezahl 4 mg KOH/g, Tropfpunkt 76°C) |
| Vergleichsbeispiel B | Stearylester der Montansäuren |
| | (Säurezahl 8 mg KOH/g, Tropfpunkt 80°C) |
| Vergleichsbeispiel C | Pentaerythrittetrastearat |
| | (Säurezahl ca. 2 mg KOH/g, Tropfpunkt ca. 61°C). |

| | |
|---|---|
| ¹) Unter Montansäuren ist hier das durch Oxidation von Rohmontanwachs erhaltene Wachssäuregemisch zu verstehen. | |

Der Polyester wurde vor der Verarbeitung 8 h bei 160°C in einem Umluftofen getrocknet, die Prüfprodukte wurden auf das noch heiße Granulat aufgetrommelt. Die Verarbeitung erfolgte auf einer Spritzgußmaschine mit folgenden Einstellungen:

| | |
|---|---|
| Temperaturprofil | 260-270-290-300°C |
| Spritzdruck | 400 bar |
| Nachdruck | 500 bar |
| Staudruck | 0 bar |
| Werkzeug-Temperatur | Soll 25°C; Ist 45°C |

Gespritzt wurden innen zylindrische, außen leicht konische Hülsen mit einer Höhe von 7 cm und einer lichten Weite von 6 cm. Die Wandstärke betrug am Anguß 3 mm, angußfern 4 mm. Beim Auswerfen der Hülse wurde über einen piezoelektrischen Kraftaufnehmer die auftretende Entformungskraft gemessen. Anschnitte aus der Hülse wurden für die Transparenzmessung im neutralgrauen Licht verwendet, die Wandstärke an der Meßstelle betrug ca. 3,5 mm.

Die erhaltenen Meßwerte sind in der nachstehenden Tabelle zusammengestellt.

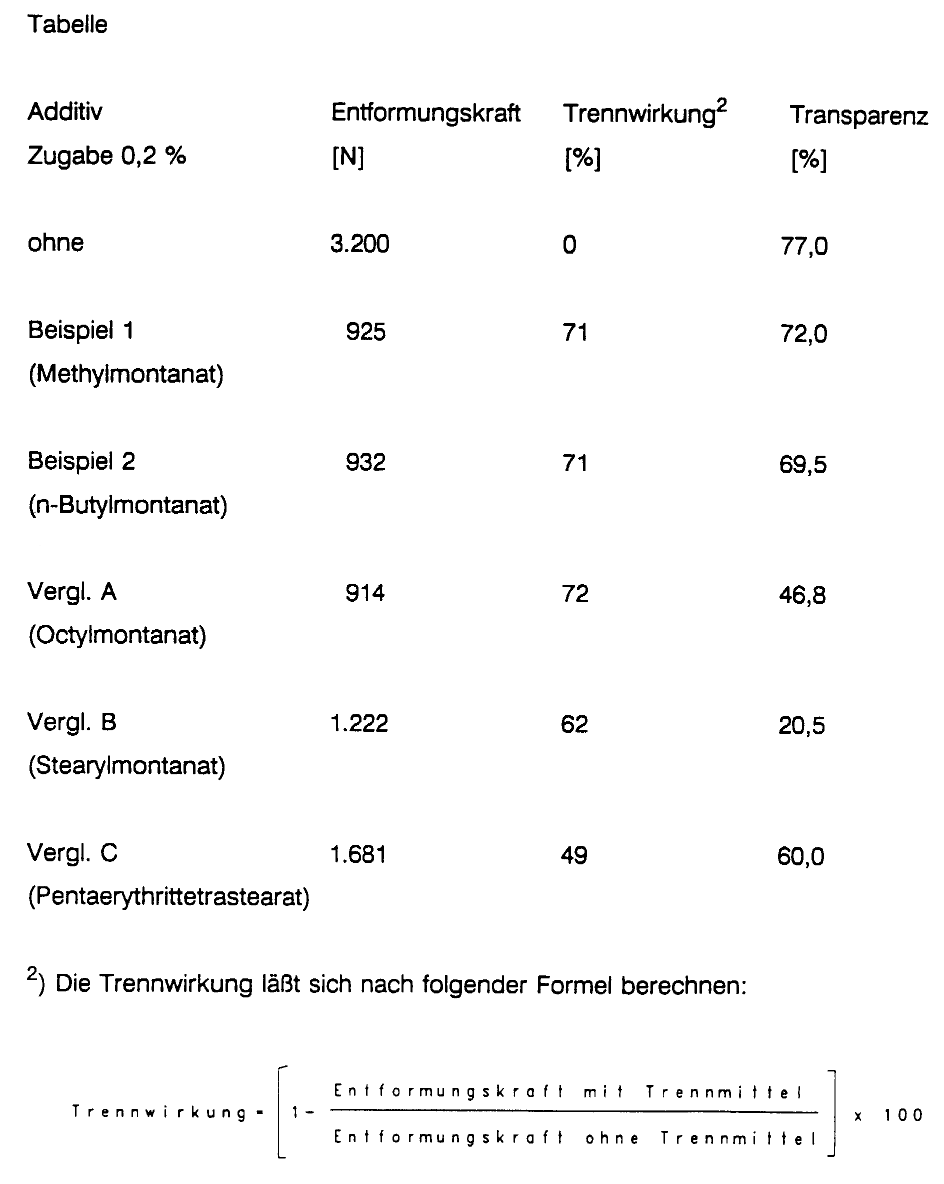

## Patentansprüche

1. Thermoplastische Kunststoff-Formmasse, bestehend aus 95 bis 99,99 Gew.-%, bezogen auf die Formmasse, **Polyester** und 0,01 bis 5,0 Gew.-%, bezogen auf die Formmasse, eines Gleitmittels in Form eines Esters der technischen Montansäure mit einem aliphatischen einwertigen Alkohol mit 1 bis 5 C-Atomen, **sowie gegebenenfalls weitere Additive.**

2. Formmasse nach Anspruch 1, dadurch gekennzeichnet, daß das Gleitmittel technisches Methylmontanat ist.

3. Formmasse nach Anspruch 1, dadurch gekennzeichnet, daß das Gleitmittel technisches Ethylmontanat ist.

4. Formmasse nach Anspruch 1, dadurch gekennzeichnet, daß es sich bei dem Polyester um Polyethylenterephthalat handelt.

5. Formmasse nach Anspruch 1, dadurch gekennzeichnet, daß sie zusätzlich zum Gleitmittel **als weitere Additive** Antioxidantien, Verarbeitungsstabilisatoren, Lichtschutzmittel, Antistatika, Verarbeitungshilfsmittel, Schlagzähigkeitsmodifikatoren, Füllstoffe, Verstärkungsmittel, Flammschutzmittel, Weichmacher, Treibmittel, Pigmente, Färbemittel oder Farbstoffe enthält.

6. Verwendung eines Esters der technischen Montansäure mit einem aliphatischen einwertigen Alkohol mit 1 bis 5 C-Atomen als Gleitmittel bei der Verarbeitung von thermoplastischen Kunststoff-Formmassen gemäß Anspruch 1 in einer Menge von 0,01 bis 5,0 Gew.-%, bezogen auf das zu verarbeitende Material.

## Claims

1. A thermoplastic molding composition consisting of 95 to 99.99% by weight, with respect to the molding composition, of polyester and 0.01 to 5.0% by weight, with respect to the molding composition, of a lubricant in the form of an ester of technical grade montanic acid with an aliphatic monohydric alcohol having 1 to 5 carbon atoms, and optionally further additives.

2. The molding composition as claimed in claim 1, wherein the lubricant is technical grade methyl montanate.

3. The molding composition as claimed in claim 1, wherein the lubricant is technical grade ethyl montanate.

4. The molding composition as claimed in claim 1, wherein the polyester is polyethylene terephthalate.

5. The molding composition as claimed in claim 1, which comprises, in addition to the lubricant, as further additives antioxidants, processing stabilizers, light stabilizers, antistatic agents, processing auxiliaries, impact modifiers, fillers, reinforcing agents, flameproofing agents, plasticizers, blowing agents, pigments, colorants or dyes.

6. Use of an ester of technical grade montanic acid with an aliphatic monohydric alcohol having 1 to 5 carbon atoms as lubricant when processing thermoplastic molding compositions as claimed in claim 1 in an amount of 0.01 to 5.0% by weight, with respect to the material to be processed.

## Revendications

1. Matière à mouler thermoplastique constituée de 95 à 99,99 % en poids par rapport à la matière à mouler, de **polyester** et de 0,01 à 5,0 % en poids, par rapport à la matière à mouler, d'un agent de démoulage sous forme d'un ester d'acide montanique industriel avec un alcool aliphatique monofonctionnel avec 1 à 5 atomes de carbone, **ainsi qu'éventuellement d'autres additifs**.

2. Matière à mouler selon la revendication 1, caractérisé en ce que l'agent de démoulage est un montanate de méthyle industriel.

3. Matière à mouler selon la revendication 1, caractérisé en ce que l'agent de démoulage est un montanate d'éthyle industriel.

4. Matière à mouler selon la revendication 1, caractérisé en ce que le polyester est un poly(téréphtalate d'éthylène).

5. Matière à mouler selon la revendication 1, caractérisé en ce qu'elle contient, en plus de l'agent de démoulage, **comme autres additifs** des antioxydants, de stabilisants de mise en oeuvre, des agents photo-protecteurs, des agents antistatiques, des adjuvants de mise en oeuvre, des agent modifiant la ténacité au choc, des charges, des agents de renfort, des ignifugeants, des plastifiants, des porogènes, des pigments, des colorants ou des matières colorantes.

6. Utilisation d'un ester d'acide montanique industriel avec un alcool aliphatique monofonctionnel avec 1 à 5 atomes de carbone comme agent de démoulage dans la mise en oeuvre de matières à mouler plastiques thermoplastiques selon la revendication 1, dans une quantité de 0,01 à 5,0 % en poids, par rapport à la matière à transformer.
